# EUROPÄISCHE PATENTSCHRIFT

(11) **EP 1 253 305 B1**
(45) Veröffentlichungstag und Bekanntmachung des Hinweises auf die Patenterteilung: **02.06.2004**
(21) Anmeldenummer: 02005813.7
(22) Anmeldetag: 14.03.2002
(51) Int. Cl.: F02B 27/02

(54) **Längenänderbares Saugrohr für eine Brennkraftmaschine**
Length variable intake tube for an internal combustion engine
Tube d'admission à longeur variable pour un moteur à combustion interne

(30) Priorität: 25.04.2001 DE 10120218
(43) Veröffentlichungstag der Anmeldung: 30.10.2002
(73) Patentinhaber: Bayerische Motoren Werke Aktiengesellschaft, 80809 München (DE)
(72) Erfinder: Petz, Roland, 84048 Mainburg (DE)

(56) Entgegenhaltungen:
- EP-A- 0 324 236
- DE-A- 1 576 022
- DE-A- 3 336 725
- DE-B- 1 009 429
- PATENT ABSTRACTS OF JAPAN vol. 009, no. 092 (M-373), 20. April 1985 (1985-04-20) & JP 59 218329 A (YAMAHA HATSUDOKI KK), 8. Dezember 1984 (1984-12-08)

## Beschreibung

Die Erfindung betrifft ein längenänderbares Saugrohr für eine Brennkraftmaschine gemäß der im Oberbegriff des Patentanspruchs 1 genannten Art.

Die Erfindung geht von der deutschen Auslegeschrift 15 76 022 aus. In dieser ist eine Ansaugleitung für eine Brennkraftmaschine mit mindestens einem gegenüber einem ortsfesten Teil der Saugleitung teleskopisch geführten Einströmstutzen für die Verbrennungsluft, welcher in Abhängigkeit von der Motordrehzahl im Sinne einer Veränderung der Gesamtlänge der Ansaugleitung verschiebbar ist. Die Verschiebung des Einströmstutzens erfolgt über ein hydraulisches Steuergerät, welches an ein von der Brennkraftmaschine betriebenes Druckmittelsystem angeschlossen ist. Im Einströmbereich des Einströmstutzens ist ein kegelförmiges Luftleitelement angeordnet. Bei hohen Motordrehzahlen ist der Einströmstutzen in Richtung des ortsfesten Saugrohrabschnittes geschoben, damit eine kürzestmögliche Saugrohrlänge realisiert ist. Diese kurze Saugrohrlänge ermöglicht bestmögliche Zylinderfüllungen bei hohen Drehzahlen. Wird die Brennkraftmaschine mit niedrigen Drehzahlen betrieben, dann wird der Einströmstutzen entgegen der Einströmrichtung in Richtung dem Luftleitelement verschoben, wodurch die Saugrohrlänge vergrößert wird. Bei niedrigen Drehzahlen liefert das verlängerte Saugrohr ebenfalls wieder beste Füllgrade für den Motor. Bei kürzestmöglicher Saugrohrlänge befindet sich das Luftleitelement außerhalb des Einströmstutzens. Wird die Saugrohrlänge vergrößert, dann wird der Einströmstutzen wie eine Hülse über das kegelförmige Luftleitelement geschoben. Durch das Luftleitelement wird bei einer Verstellung des Einströmstutzens in Richtung längeres Saugrohr nicht nur die Saugrohrlänge verändert, sondern auch der Saugrohrquerschnitt, wodurch eine bessere Füllung des Zylinders mit Luft zu niedrigen Drehzahlen hin nochmals unterstützt wird.

Bei gekrümmten Saugrohren, kann es insbesondere bei hohen Motordrehzahlen trotz des Luftleitelements zur Ablösung der Ansaugluftströmung vom Innenradius des Saugrohres kommen, wodurch der Füllgrad der Zylinder deutlich verringert wird und die maximale Motorleistung nicht erzielt wird.

Unter Ablösung wird allgemein verstanden, dass sich die Luftströmung von der die Luft leitenden Oberfläche löst und somit der Luftwiderstand steigt, was zu einer Verringerung des Luftdurchsatzes führt.

Aufgabe der Erfindung ist es, einen verbesserten Zylinderfüllgrad für gekrümmte Saugrohre zu erzielen.

Diese Aufgabe wird erfindungsgemäß von den Merkmalen im kennzeichnenden Teil des Patentanspruchs 1 gelöst. Besonders vorteilhaft ist die erfindungsgemäße Konstruktion für die verbesserte Durchströmung von Einlasskanälen, wie z. B. Tumble-Einlasskanälen. Tumble-Einlasskanäle werden benötigt, um eine makroskopische Strömungsstruktur im Zylinder, eine Strömungswalze senkrecht zur Zylinderachse, zu erhalten. Durch ein strömungsbeeinflussendes Element wird der Füllgrad der Brennkraftmaschine deutlich verbessert, ohne die Tumble-Strömung nachteilig zu beeinflussen. Die Verbesserung des Füllgrades tritt auch bei anderen gekrümmten Einlasskanälen, z. B. Tangential-Einlasskanälen für eine Strömung um die Zylinderachse, auf. Die Erfindung führt zu einer verbesserten Leistungsabgabe der Brennkraftmaschine. Dieser Effekt wird umso deutlicher, je höher die Drehzahl der Brennkraftmaschine ist, da hier die Ablöseeffekte der Ansaugluft von der Saugrohrinnenoberfläche am größten sind.

Da die Ablösung der Strömung von der Oberfläche abhängig von der Strömungsgeschwindigkeit ist, kann entsprechend der Ansprüche 2 und 3 die Ablösung für einen bestimmten Geschwindigkeitsbereich der Strömung vermieden werden.

Gemäß Anspruch 4 kann der Anstellwinkel drehzahlabhängig eingestellt werden, so dass zumindest über einen großen, beziehungsweise über den gesamten Drehzahlbereich der Brennkraftmaschine keine Ablösung auftritt.

Gemäß den Ansprüchen 6 bis 9 kann das strömungsbeeinflussende Element in vorteilhafter Weise an nahezu jede Saugrohrgeometrie angepasst und somit eine Ablösung verhindert werden. Darüber hinaus gestatten die Variationen an Größe und räumlicher Lage auch die Anordnung an unterschiedliche Saugrohrtypen, wie beispielsweise einem Schaltsaugrohr.

Im Folgenden sind zwei bevorzugte Ausführungsbeispiele in einer einzigen Zeichnung dargestellt.

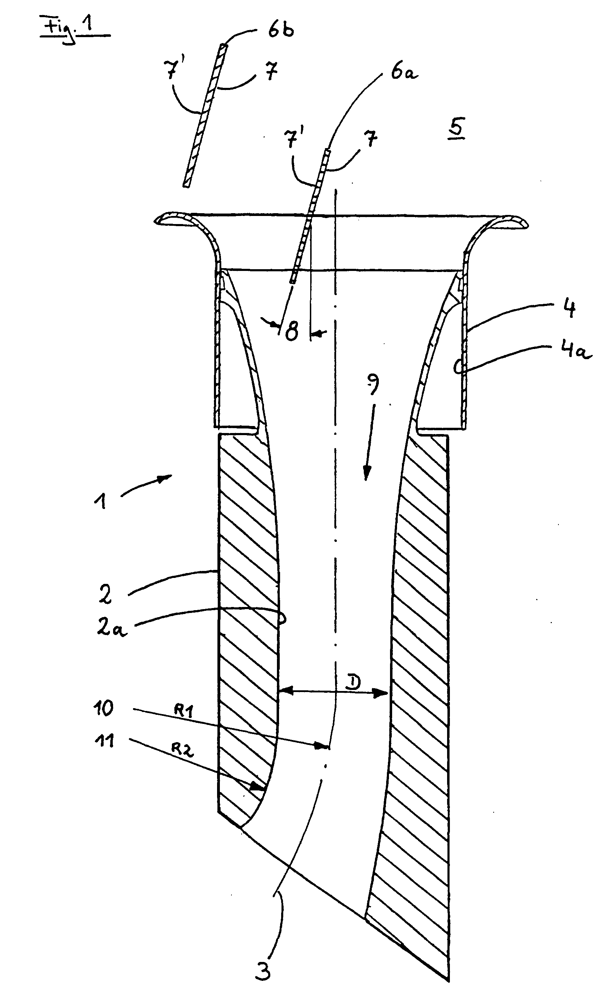

Figur 1 zeigt ein längenänderbares Saugrohr 1, bestehend aus einem ortsfesten Saugrohrabschnitt 2 mit einer ersten Innenkontur 2a und mit einer Saugrohrlängsachse 3 und einem Einströmstutzen 4 mit einer zweiten Innenkontur 4a. Die Saugrohrlängsachse 3 ist gleichzeitig die Saugrohrlängsachse für den Einströmstutzen 4. Eine Einströmrichtung 9 der Ansaugluft, dargestellt durch einen Pfeil, ist definiert vom Einströmstutzen 4 zum ortsfesten Saugrohrabschnitt 2. Der Einströmstutzen 4 ist teleskopisch auf dem ortsfesten Saugrohrabschnitt 2 verschiebbar.

Die erste Innenkontur 2a ist im Ansauglufteintrittsbereich trichterförmig und verengt sich in Einströmrichtung 9 auf einen minimalen Saugrohrdurchmesser D und weitet sich anschließend wieder auf. Die Saugrohrlängsachse 3, somit auch das längenänderbare Saugrohr 1, ist in einer Ebene, hier der Zeichnungsebene, gekrümmt und bildet eine Krümmung 10 mit einem mittleren Radius R1. Im Krümmungsbereich der Krümmung 10 bildet die erste Innenkontur 2a mit R2 einen Innenradius 11.

Die zweite Innenkontur 4a des Einströmstutzens 4, ist im Ansauglufteintrittsbereich ebenfalls trichterförmig und geht in Einströmrichtung 9 in eine zylindrische, auch oval ist möglich, Kontur über, die in Richtung der Saugrohrlängsachse 3 auf einer zylindrischen (ovalen) Außenkontur des ortsfesten Saugrohrabschnittes 2 verschiebbar ist.

Im Ansauglufteintrittsbereich des längenänderbaren Saugrohres 1 ist ein Einströmbereich 5 definiert. Dieser erstreckt sich in Strömungsrichtung 9 vor dem längenänderbaren Saugrohr 1 bis auf einen Abstand von dem zehnfachen Maß des minimalen Saugrohrdurchmessers D und auf den doppelten minimalen Innendurchmesser D in das längenänderbare Saugrohr 1 hinein. In diesem Einströmbereich 5 ist ein strömungsbeeinflussendes Element 6a, 6b angeordnet.

In einer ersten Ausführungsvariante ist das strömungsbeeinflussende Element 6a, hier ein Leitblech mit zwei parallelen und weitestgehend planen Flächen 7, 7', direkt an den Einströmstutzen 4 angeordnet. Das Strömungsbeeinflussende Element 6a ist normal zur Ebene, die von der Krümmung 10 aufgespannt wird, ausgerichtet und erstreckt sich über den gesamten Querschnitt des Einströmstutzens 4. Sie sind miteinander lösbar verbunden. Ferner bildet das strömungsbeeinflussende Element 6a mit der Saugrohrlängsachse 3 einen Winkel 8, der in diesem Ausführungsbeispiel 15 Grad beträgt. Der Winkel 8 kann jedoch im Bereich von +/- 30 Grad zur Saugrohrlängsachse 3 liegen. Das strömungsbeeinflussende Element 6a erstreckt sich ebenso weit in das längenänderbare Saugrohr 1 hinein, wie es herausragt. Das Verhältnis zwischen hinein- und herausragendem Teil kann in verschiedenen Ausführungsformen unterschiedlich sein.

In anderen Ausführungsbeispielen kann das strömungsbeeinflussende Element 6a auch unlösbar und oder schwenkbeweglich zur Saugrohrlängsachse angeordnet sein und kann auch mit Hilfe einer Verdrehvorrichtung in seinem Winkel 8 in dem oben genannten Bereich variiert werden, wobei die Lage der Schwenkachse bezüglich dem Einströmstutzen 4 invariant ist. Ferner kann das strömungsbeeinflussende Element 6a nahezu jede Gestalt haben, beispielsweise keilförmig, rund, eckig etc..

Ein weiteres bevorzugtes Ausführungsbeispiel stellt das strömungsbeeinflussende Element 6b dar. Auch in diesem Fall ist es im Einströmbereich 5 angeordnet, jedoch besteht zu dem Einströmstutzen 4 keine Verbindung. Alle für das Ausführungsbeispiel 6a geltenden Ausführungsformen gelten auch für das strömungsbeeinflussende Element 6b.

Bei Betrieb der nicht dargestellten Brennkraftmaschine strömt die Ansaugluft in der Einströmrichtung 9 durch das längenänderbare Saugrohr 1. Insbesondere bei hohem Luftmassendurchsatz und somit hohen Strömungsgeschwindigkeiten kommt es ohne ein strömungsbeeinflussendes Element 6a, 6b am Innenradius 11 zur Ablösung der Ansaugluftströmung. Durch die hier beschriebene erfindungsgemäße Maßnahme wird der Ablöseeffekt für einen weiten Drehzahlbereich der Brennkraftmaschine vermieden bzw. minimiert. Hierdurch erreicht die Brennkraftmaschine im gesamten Drehzahlbereich ihre optimale Leistung.

Das strömungsbeeinflussende Element 6a, 6b ist in den Ausführungsbeispielen wie der ortsfeste Saugrohrabschnitt 2 und der Einströmstutzen 4 aus Kunststoff gefertigt, kann jedoch ebenso aus metallischen Materialien oder Verbundwerkstoffen hergestellt sein.

Der ortsfeste Saugrohrabschnitt 2, der hier aus einem Vollmaterial gefertigt ist, kann auch rohrförmig und dünnwandig sein.

Der ortsfeste Saugrohrabschnitt 2 ist mit einem hier nicht dargestellten Zylinderkopf lösbar verbunden, er kann jedoch auch integraler Bestandteil des Zylinderkopfes sein. Die konstruktive Ausgestaltung der Innenkontur des ortsfesten Saugrohrabschnittes 2 und des Einströmstutzens 4 kann in fast beliebiger Weise variieren, und wird jeweils an die vorliegende Brennkraftmaschine angepasst und optimiert.

### Bezugszeichenliste:

- 1: längenänderbares Saugrohr
- 2: ortsfester Saugrohrabschnitt
- 2a: erste Innenkontur
- 3: Saugrohrlängsachse
- 4: Einströmstutzen
- 4a: zweite Innenkontur
- 5: Einströmbereich
- 6a, 6b: strömungsbeeinflussendes Element
- 7, 7': plane Fläche
- 8: Winkel
- 9: Einströmrichtung
- 10: Krümmung
- 11: Innenradius

## Patentansprüche

1. Längenänderbares Saugrohr für eine Brennkraftmaschine mit einem zur Brennkraftmaschine ortsfesten Saugrohrabschnitt mit einer Saugrohrlängsachse und mindestens einem, gegenüber dem ortsfesten Saugrohrabschnitt in Richtung der Saugrohrlängsachse verschiebbaren Einströmstutzen mit einem Einströmbereich, und einem strömungsbeeinflussenden Element, das in dem Einströmbereich angeordnet ist, mit einer Einströmrichtung vom Einströmstutzen zum ortsfesten Saugrohrabschnitt,
**dadurch gekennzeichnet, dass**
die Saugrohrlängsachse (3) zumindest auf der dem Einströmstutzen (4) abgewandten Seite eine Krümmung (10) aufweist und das strömungsbeeinflussende Element (6a, 6b) ortsfest zum Einströmstutzen (4) angeordnet ist, wobei das strömungsbeeinflussende Element (6a, 6b) zumindest eine weitgehend plane Fläche (7, 7') aufweist, die normal zur Krümmungsebene angeordnet ist.

2. Längenänderbares Saugrohr nach Anspruch 1,
**dadurch gekennzeichnet, dass** die plane Fläche (7, 7') und die Saugrohrlängsachse (3) miteinander einen Winkel (8) einschließen.

3. Längenänderbares Saugrohr nach den Ansprüchen 1 und 2,
**dadurch gekennzeichnet, dass** der Winkel (8) einen Bereich von +30° bis -30° einschließt.

4. Längenänderbares Saugrohr nach zumindest einem der zuvor genannten Ansprüche,
**dadurch gekennzeichnet, dass** das strömungsbeeinflussende Element (6a, 6b) schwenkbeweglich angeordnet ist.

5. Längenänderbares Saugrohr nach zumindest einem der zuvor genannten Ansprüche,
**dadurch gekennzeichnet, dass** der Winkel (8) in Abhängigkeit von der Drehzahl der Brennkraftmaschine einstellbar ist.

6. Längenänderbares Saugrohr nach den Ansprüchen 1 bis 5,
**dadurch gekennzeichnet, dass** das strömungsbeeinflussende Element (6a) in den Einströmstutzen (4) hineinragt.

7. Längenänderbares Saugrohr nach den Ansprüchen 1 bis 5,
**dadurch gekennzeichnet, dass** das strömungsbeeinflussende Element (6b) in Strömungsrichtung (9) vor dem Einströmstutzen (4) angeordnet und von diesem beabstandet ist.

8. Längenänderbares Saugrohr nach zumindest einem der zuvor genannten Ansprüche,
**dadurch gekennzeichnet, dass** die Länge des strömungsbeeinflussenden Elementes (6a, 6b) in Strömungsrichtung (9) mindestens ein Zehntel des größten Innendurchmessers des ortsfesten Saugrohrabschnittes (2) beträgt.

## Claims

1. A variable-length suction pipe for an internal combustion engine, comprising a non-displaceable portion relative to the engine and with a longitudinal axis and at least one inflow nozzle movable relative to the non-displaceable portion in the direction of the longitudinal axis and with an inflow region, and also comprising a flow-influencing element disposed in the inflow region, with a direction of inflow from the nozzle to the non-displaceable suction pipe portion, **characterised in that**
the longitudinal axis (3) of the suction pipe has a bend (10), at least one the side remote from the inflow nozzle (4), and the flow-influencing element (6a, 6b) is disposed non-displaceably relative to the inflow nozzle (4), wherein the flow-influencing element (6a, 6b) has an at least substantially flat surface (7, 7') at right angles to the plane of the bend.

2. A variable-length suction pipe according to claim 1, **characterised in that** the flat surface (7, 7') is at an angle to the longitudinal axis (3) of the suction pipe.

3. A variable-length suction pipe according to claims 1 and 2, **characterised in that** the angle (8) includes a range from +30° to -30°.

4. A variable-length suction pipe according to at least one of the preceding claims, **characterised in that** the flow-influencing element (6a, 6b) is pivotably mounted.

5. A variable-length suction pipe according to at least one of the previous claims, **characterised in that** the angle (8) is adjustable in dependence on the speed of the engine.

6. A variable-length suction pipe according to claims 1 to 5, **characterised in that** the flow-influencing element (6a) projects into the inflow nozzle (4).

7. A variable-length suction pipe according to claims 1 to 5, **characterised in that** the flow-influencing element (6b) is disposed in front of the inflow nozzle (4) in the flow direction (9) and at a distance from it.

8. A variable-length suction pipe according to at least one of the previous claims, **characterised in that** the length of the flow-influencing element (6a, 6b) in the flow direction (9) is at least one-tenth of the maximum inner diameter of the non-displaceable portion (2) of the suction pipe.

## Revendications

1. Tubulure d'admission de longueur variable pour un moteur à combustion interne, comprenant un segment de tubulure d'admission qui est fixe par rapport au moteur à combustion interne et qui possède un axe longitudinal de tubulure d'admission, et au moins un tube d'entrée qu'on peut faire coulisser par rapport au segment fixe de la tubulure d'admission selon la direction de l'axe longitudinal de la tubulure d'admission, et qui comprend une région d'entrée et un élément influant sur l'écoulement qui est disposé dans la région d'entrée, avec un sens d'entrée allant du tube d'entrée au segment fixe de la tubulure d'admission,
**caractérisée en ce que**
l'axe longitudinal (3) de la tubulure d'admission présente une courbure (10), du moins sur le côté qui est éloigné du tube d'entrée (4), et l'élément influant sur l'écoulement (6a, 6b) est disposé en position fixe par rapport au tube d'entrée (4), l'élément influant sur l'écoulement (6a, 6b) présentant au moins une surface pratiquement plane (7, 7') qui est disposée normalement au plan de la courbure.

2. Tubulure d'admission de longueur variable selon la revendication 1,
**caractérisée en ce que**
la surface plane (7, 7') et l'axe longitudinal (3) de la tubulure d'admission forment entre eux un angle (8).

3. Tubulure d'admission de longueur variable selon les revendications 1 et 2,
**caractérisée en ce que**
l'angle (8) inclut un intervalle de + 30° à - 30°.

4. Tubulure d'admission de longueur variable selon au moins une des revendications précitées,
**caractérisée en ce que**
l'élément influant sur l'écoulement (6a, 6b) est disposé mobile en pivotement.

5. Tubulure d'admission de longueur variable selon au moins une des revendications précitées,
**caractérisée en ce que**
l'angle (8) peut être réglé en fonction de la vitesse de rotation du moteur à combustion interne.

6. Tubulure d'admission de longueur variable selon les revendications 1 à 5,
**caractérisée en ce que**
l'élément influant sur l'écoulement (6a) est engagé dans le tube d'entrée (4).

7. Tubulure d'admission de longueur variable selon les revendications 1 à 5,
**caractérisée en ce que**
l'élément influant sur l'écoulement (6b) est disposé en amont du tube d'entrée (4) dans le sens de l'écoulement (9) et est espacé de celui-ci.

8. Tubulure d'admission de longueur variable selon au moins une des revendications précitées,
**caractérisée en ce que**
la longueur de l'élément influant sur l'écoulement (6a, 6b), mesurée dans le sens de l'écoulement (9), vaut au moins un dixième du plus grand diamètre intérieur du segment fixe (2) de la tubulure d'admission.
